# EUROPEAN PATENT APPLICATION

(11) **EP 2 000 244 A1**
(43) Date of publication of application: **10.12.2008**
(21) Application number: 07405163.2
(22) Date of filing: 06.06.2007
(51) Int. Cl.: B23K 3/02, B23B 31/107

(54) **Holder for soldering tip and soldering tip**

(71) Applicant: MTA Automation AG, 3238 Gals (CH)
(72) Inventor: Di Francesco, Aldo, 2575 Täuffelen (CH); Knuchel, Claude-Alain, 2603 Péry (CH)
(74) Representative: Störzbach, Michael Andreas

(57) **Abstract**

A soldering tip holder (5, 53), preferably for a soldering robot, comprises locking means, e.g. pins or balls (15, 79) that are located in a wall surrounding a cavity (25) destined for receiving a soldering tip (3, 67). The locking means (15, 79) can be moved at least partly into the cavity (25), whereby they engage with corresponding slots (17) and recesses (87) of the soldering tip (3, 67) and lock it in the cavity (25).

## Description

The present invention relates to a holder for a soldering tip according to the preamble of claim 1 and to a soldering tip for use with the holder.

Soldering robots are in use for series production in cases where soldering at exact positions is needed. The soldering tips of the soldering heads of these robots are pushed on the heating elements like sleeves. For securing the tip to the heating element, a spring or similar resilient element is attached to the tip and the soldering head, and holds the tip with some force on the heating element.

Soldering tips are subject to wear and tear and have to regularly be replaced. For this purpose, the spring has to be removed. Due to the spring and the mounting manner, this change of the tip requires intervention of an operator. Hence, it has to be taken care that no burns occur requiring either protective clothing (gloves) or a long wait until the tip has cooled off. Alternatively, pliers may be used, yet the difficulties of releasing and attaching the spring and the risk of injury of the operator remain.

Accordingly, an object of the present invention is to provide a holder for a soldering tip, which allows a faster change of the tip while maintaining a proper seat during work.

Such a holder is given in claim 1, the further claims define preferred embodiments and soldering tips usable with the holder.

Accordingly, the tips are held in the holder by movable elements (or one such element), which in one position reduces the cross-section of an opening in which the tip is inserted. The tip is provided with a groove or depression for engagement with the movable elements.

For reproducing the effect of the spring, the depression, or more exactly its walls may be shaped the way that the movable element when pushed into the opening, exerts a force on the soldering tip keeping it in the provided position.

The invention will be further explained by means of preferred, non-limiting embodiments of the invention with reference to the drawing:
- Fig. 1: Elevational view on a soldering tip holder with soldering tip;
- Fig. 2: longtudinal section according to II - II in Fig. 3 of the holder;
- Fig. 3: front view on the holder;
- Fig. 4: detail IV of Fig. 2;
- Fig. 5: detail as in Fig. 4, yet with the soldering tip removed;
- Fig. 6: longitudinal section of a second embodiment; and
- Fig. 7: detail VII in Fig. 6.

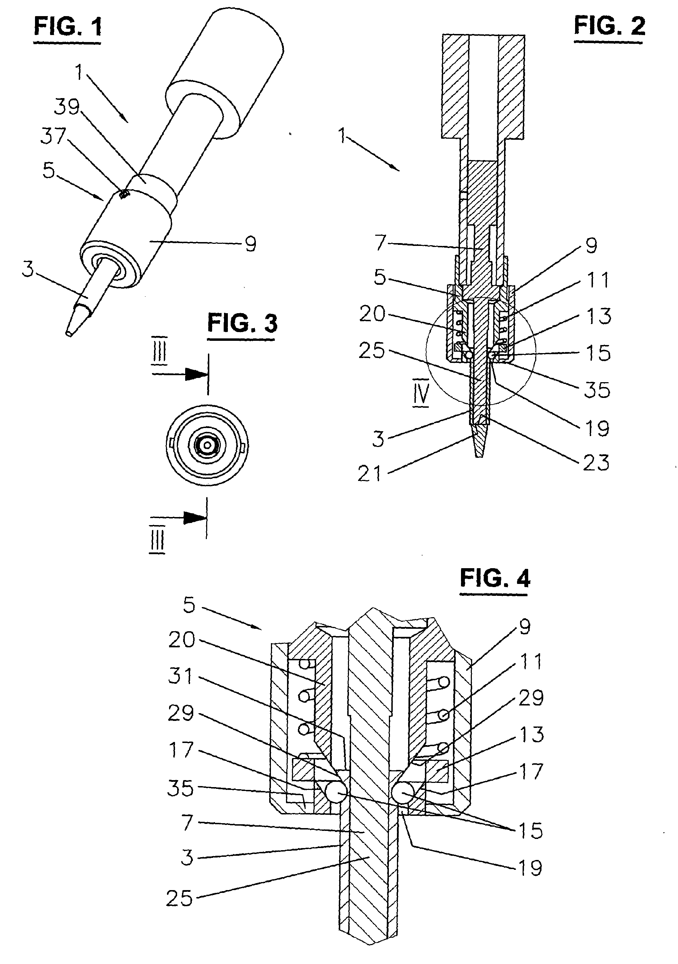

Fig. 1 shows the front part of a soldering head 1 of a soldering robot. The soldering tip is inserted in the tip holder 5. Inside the tip 3 extends the heating element 7. Its power supply and temperature control provisions are known in the art and therefore not shown.

The tip holder section 5 comprises a release sleeve 9 and a locking spring 11, both acting on locking ring 13 and two locking pins 15. The locking pins 15 are guided in slots 17, which are cut inwards to the center of the holder section 5 and in the Figures downward to the entry opening 19 for the tip 3.

The pins 15 are of a length that their ends extend into the space between the outer surface of the tube 20 of the tip holder 5 and the inner surface of the release sleeve 9 and are engageable with locking ring 13.

The soldering tip 3 is hollow to receive the heating element 7. For exact temperature control, the front face 21 of the heating element must be kept in immediate contact with the bottom 23 of the cavity 25 in the soldering tip 3. The shape of cavity 25 is closely adapted to the heating element 7 so that a low thermal resistance between the soldering tip 3 and the heating element 7 is attained. However, even in heated state, the tip 3 has to remain easily withdrawable from the heating element, most preferably so easy that it drops down by its weight if the locking mechanism is released.

In the shaft 27 of soldering tip 3, two tangential grooves 29 are provided. Their cross-sections correspond to the thickness of the pins 15.

When the soldering tip 3 is pushed into the tip holder 5, its rear end 31 pushes the pins 15 backwards (upwards in the figures) and outwards due to the slots 17. Thereby, the locking ring 13 is pushed upwards and the spring 11 is tensioned.

Then, by the force exerted by spring 11 via locking ring 13, the pins 15 are pushed back in the slots 17 and the grooves 29 of the soldering tip 3 whereby the soldering tip is tightly held in the tip holder 5.

For keeping the front face 21 of heating element tight upon the bottom of cavity 25, the slots 17 are cut in a slighty less steep angle than the grooves 29 or are bent towards the center therefor. By this discrepancy, pin 15 does neither touch the bottom of the slots 17 nor the groove 29, but remains in an intermediate position though quite near the mentioned limiting position. In this intermediate position, due to the force of still tensioned spring 11, the pins 15 exert a persistent upwardly directed force, i.e. directed into the holder 5, onto the soldering tip 3.

The release sleeve 9 rests on retaining ring 33. For releasing the soldering tip 3, the release sleeve 9 is pushed upwardly, so that its protrusion 35 on its interior surface takes along locking ring 13. The pins 15 are released and may be pushed outwardly just by the effect of the weight of the soldering tip 3.

Obviously, there may even be additional means to push the pins 15 upwards, like a second protrusion (not shown) below the ends of the pins 15. The second protrusions abut on the pins 15 when the sleeve 9 is pushed into the release position, and the pins 15 are forcedly pushed back and outwards.

Another conceivable variant is to provide the locking ring 13 with protrusions extending into slots in the interior surface of the release sleeve 9. These slots are closed on their lower end, i.e. towards the entry 19 so that the locking ring 9 can be moved upwardly.

The release sleeve 9 is rotationally fixed by pins 37 guided in longitudinal grooves 39 in the surface of holder 5.

Another positive effect of the tip holder 5 consists in that the soldering tip is automatically angularily oriented by the forced alignment of slots 17 and grooves 29 by the locking pins 15.

The sleeve 9 may be operated by hand or by an actuator. E.g. the soldering tip 3, when used, may be disposed in a receptacle having a tube-like entry with a diameter smaller than the one of the release sleeve 9. When the tip 3 is moved into this entry, the release sleeve 9 touches its border and is pushed back so that the tip 3 is released.

Still to mention that the holder 5 can be easily exchanged for conventional holders in soldering robots as it is a quite compact and complete unit.

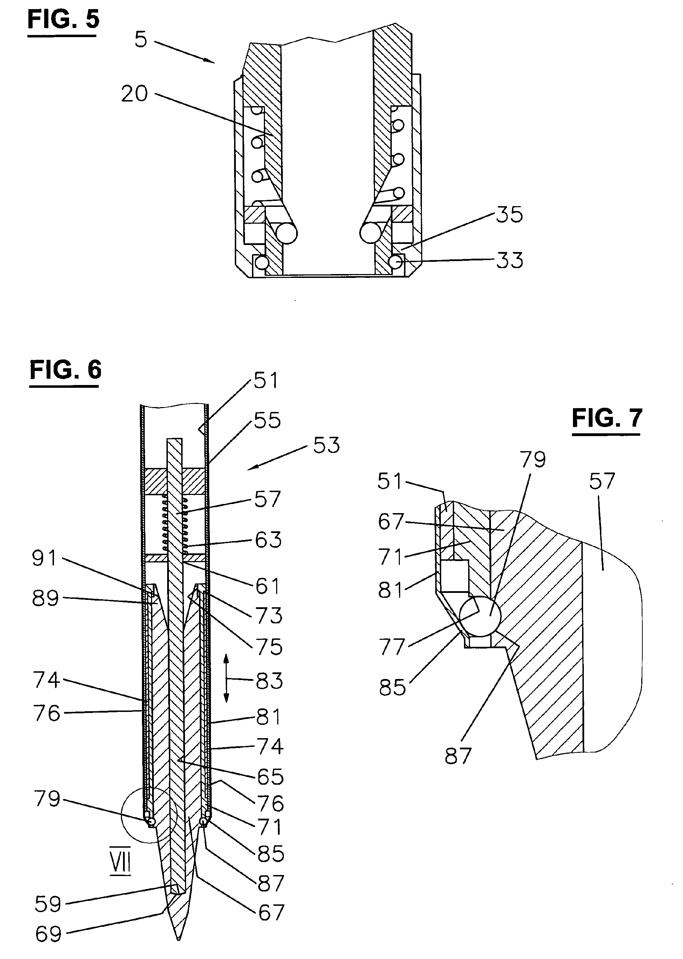

Figures 6 and 7 depict a second embodiment which, due to its slender construction, may even be used in hand-held soldering irons.

In a thin-walled tube 51 of tip holder 53, a disk-shaped rest ring 55 is fixed. A temperature sensor 57 extends movably through the rest ring 55. Further to its tip 59, a disk 61 is attached. Hence, the rod-shaped temperature sensor 57 is centered in the tip holder 53 by the rings 55 and 61. Between the rings 55 and 61, a spring 63 is tensioned to urge the temperature sensor 57 into the receiving cavity 65 of the soldering tip 67 so that the tip 59 of the temperature sensor 57 rests on the bottom 69 of the cavity 65.

In the tube 51, a guiding sleeve 71 is fixedly attached, e.g. welded. Its rear end 73 is ring-shaped in order to slightly reduce its diameter. The thereby created rim 75 serves as a stop for the soldering tip 67.

Over a large part of the overall length of sleeve 71, a cavity 74 is provided in which the electrical heating 76 is arranged.

The front end of the sleeve 71 is provided with three inwardly tapered holes 77. In each hole 77 is a ball 79 with a diameter that is slightly larger than the narrow inner opening of the holes 77.

The balls 79 are kept in the holes 77 by a locking sleeve 81 which is slidably mounted (arrow 83) on the tube 51. In the drawn upper position, the balls 79 are pushed into the holes 77 by the tapered end section 85 (cf. Fig. 7).

If the sleeve 81 is moved forward (in the Figure: downward), the balls 79 are free to move outwardly in a position where they do no more engage with the recesses 87.

When mounting a soldering tip 67, its rear end 89 is introduced into the opening of the tip holder 53. The terminal section 91 of the soldering tip 67 has a reduced outer diameter so that it may pass the balls 79 even if the locking sleeve 81 is in the locked, rearward position as drawn. When the sleeve 81 is moved to the release position, the balls 79 can be pushed back in the holes 77 and the soldering tip pushed into the tip holder 53 until the soldering tip 67 hits the rim 75. Then, the locking sleeve 81 is subjected to a force urging it in the locked position. The soldering tip 67 is moved back, possibly only by action of the heating element 65 pushed forward by spring 63. When the recesses 87 pass by the holes 77, the balls 79 are pushed forward into the recesses 87 and lock the soldering tip 67 in this position.

The soldering tip 67 is removed by moving the sleeve 81 forward, whereby the balls 79 are released. By the action of spring 63, possibly supported by pulling the soldering tip 67 or its weight, it drops out of the tip holder 53.

For a high performance, the cross-section of the heating element is matched with the cavity in the soldering tip so that it snugly fits therein. It is, though, possible to design it such that the action of spring 63 and the weight of the soldering tip 67 suffice that it can drop out of the holder 53 in about a vertical position by its weight. Obviously, when the soldering tip 67 is locked, the spring 63 is slightly tensioned so that the temperature sensor 57 is perfectly inserted into the soldering tip.

With spherical recesses 87, the soldering tip 67 can only be fastened in certain fixed angular positions. If the recesses 87 and the holes 77 are non-symmetrically arranged, it is possible to have only one rotational position where the soldering tip 67 can be locked. Soldering tips with flat tips or of another shape that allow to dermine the rotational position can be turned in the about correct position or may be stored in receptacles keeping the tips in a defined position.

The correct rotational position may also be rendered discernable by markings or additional guiding means, like a bar or pin and a corresponding longitudinal groove on the sleeve respectively in the soldering tip 67, or vice versa.

On the other hand, e.g. for a soldering tip with a point tip, instead of recesses 87, a circular groove of arc cross-section may be machined in the soldering tip 67, so that by the locking mechanism, no relative orientation is defined. Of course, additional means, like a hexagonal end of the tip may define such positions.

This soldering tip holder is usable for soldering robots, yet it is conceivable to be used for a soldering iron as well.

Based on the description of preferred embodiments, the one skilled in the art may conceive numerous alterations without leaving the sope of protection of the invention which is defined by the attached claims. Some of such alterations are already mentioned in the description of the examples.

Additional thinkable variants are:
- Instead of two locking pins in the first example, even only one or more than two may be present.
- The heating element of the first example may be movably arranged like the temperature sensor 57 of the second example so that its perfect seat in the soldering tip is secured by a spring tensioned by inserting the soldering tip. Prominently with this provision, the slots 17 and grooves 29 may be machined with the same angle.
- The cavity for receiving the soldering tip and the soldering tip having a non-spherical cross-section defining a number down to only one of rotational orientations of the soldering tip in which the tip can be inserted in the tip holder.

## Claims

1. Soldering tip holder (5, 53), **characterized in that** it comprises a cavity extending mainly in one dimension for inserting therein a soldering tip (3, 67) and at least one locking means (15, 79) being movable into the cavity (25) to a locking position, so that a soldering tip (3, 67) can be locked in the cavity (25) by engagement with the locking means (15, 79).

2. Soldering tip holder (5, 53) according to claim 1, **characterized in that** the locking means (15, 79) are held in the locked position by a securing member (13, 81).

3. Soldering tip holder (5, 53) according to one of claims 1 or 2, **characterized in that** the securing member (13, 81) encloses the cavity (25) and is movable between a locking and a release position.

4. Soldering tip holder (5, 53) according to claim 3, **characterized in that** the securing member (13) is held in the locking position by a spring-elastic member (11).

5. Soldering tip holder (5, 53) according to one of claims 1 to 4, **characterized in that** the locking means (15) are substantially rod-shaped.

6. Soldering tip holder (5, 53) according to claim 5, **characterized in that** the locking means (15) are located in a slot (17) which obliquely extends into the cavity (25).

7. Soldering tip holder (5, 53) according to one of claims 5 or 6, **characterized in that** two locking means (15) in diametrically opposed position are present in the cavity (25).

8. Soldering tip holder (5, 53) according to one of claims 1 to 3, **characterized in that** the locking means (79) are substantially spherical and held in holes (77) in a wall (71) of the cavity.

9. Soldering tip holder (5, 53) according to claim 8, **characterized in that** the wall (71) of the cavity (25) has a width that is smaller than the diameter of the locking means (79) and that the securing member (81) has a section of a smaller diameter and is movable over outer openings of the holes (77) in order to lock the locking means (79) in the locking position.

10. Soldering tip (3, 67) for use with the soldering tip holder (5, 53) of one of the claims 1 to 9, **characterized in that** it comprises a hollow shaft (27) to be inserted in the cavity (25) and that the shaft is provided with recesses (29, 87) for receiving the locking means (15, 79).

11. Soldering tip (3, 67) according to claim 10, **characterized in that** the recess is substantially a slot (29) which extends substantially straight, tangentially and transversally to the length axis of the soldering tip so that a rotation thereof is inhibited by the locking means when engaged.

12. Soldering tip (3, 67) according to one of claims 10 or 11, **characterized in that** the slot (29) is inclined with respect to the cross-section of the soldering tip in an angle different from the angle of the slot (17) so that by a simultaneous movement of the locking means (15) into the slots of the soldering tip holder (5, 53) and the soldering tip (3, 67), a force is created forcing the soldering tip into the soldering tip holder.

13. Soldering tip (3, 67) according to one of claims 10 to 12, **characterized in that** it is provided with the same number of slots (29) than the soldering tip holder (5) and provides slots (17) for the locking means (15, 79).

14. Soldering tip (67) for use with soldering tip holder (53) according to one of claims 8 or 9, **characterized in that** it is provided with at least one recess (87) shaped substantially complementarily to the locking means (79) so that the locking means are engageable with the soldering tip.

15. Soldering tip (67) according to claim 14, **characterized in that** at least two recesses (87) are provided in an arrangement that only in a number of predefined rotational positions, preferably only in one position, all locking means (79) can engage with the recesses (87).
